# EUROPÄISCHE PATENTSCHRIFT

(11) **EP 0 321 748 B1**
(45) Veröffentlichungstag und Bekanntmachung des Hinweises auf die Patenterteilung: **17.02.1993**
(21) Anmeldenummer: 88119968.1
(22) Anmeldetag: 30.11.1988
(51) Int. Cl.: E04F 15/024, E04C 2/04, C04B 28/16, E04D 11/00

(54) **Verfahren zur Herstellung von Trägerplatten für Doppelböden, Dächer o.dgl.**
Method for production of bearing slabs for sectional false floors, ceilings, roofs or the like
Méthode pour la réalisation de plaques porteuses pour planchers surélevés, plafonds, toits ou semblables

(30) Priorität: 23.12.1987 DE 3743760
(43) Veröffentlichungstag der Anmeldung: 28.06.1989
(73) Patentinhaber: VAW FLUSSSPAT-CHEMIE GMBH, D-92551 Stulln (DE)
(72) Erfinder: Born, Helmut, Ing. grad., D-8470 Nabburg (DE); Schultz, Gerhard, Dipl.-Ing., D-8460 Schwandorf (DE)
(74) Vertreter: Müller-Wolff, Thomas, Dipl.-Ing.

(56) Entgegenhaltungen:
- EP-A- 0 032 421
- DE-A- 2 147 154
- DE-A- 2 522 537
- DE-A- 2 737 007
- DE-A- 2 752 897
- DE-U- 8 620 150
- DE-U- 8 800 200
- FR-A- 2 349 420

## Beschreibung

Die Erfindung betrifft ein Verfahren zur Herstellung einer Trägerplatte für Doppelböden, Decken, Dächer o. dgl. unter Verwendung von natürlichem und/oder synthetischem Anhydrit, Anhydritbindern und/oder weiteren Füllmassen als Ausgangsstoffen, wobei den Ausgangsstoffen Fasermaterial aus Glas und/ oder Stahl zugemischt wird.

Ein Verfahren der eingangs genannten Art ist aus der DE-A-2 522 537 bekannt. Dabei wird leichtes Gipsmaterial, insbesondere für großstückige Körper mit einem Gehalt an Anhydrid bzw. Gipshalbhydrat und unter Verwendung von Verstärkungs- bzw. Bewehrungselementen, Fasern und/oder leichten Zuschlagstoffen hergestellt. Als Fasermaterial können anorganische Fasern insbesondere Kohlefasern, Aluminiumfasern bzw. aluminiumhaltige Fasern und/oder Glasfasern verwendet werden. Zur Erhöhung der Affinität und Verringerung des Ausdehnungskoeffizienten wird dem Material Ettringit zugesetzt.

Ettringit ist ein Kalziumaluminatzement der folgenden chemischen Zusammensetzung:

3 CaO · Al₂O₃ · 3CaSO₄ · 32 H₂O.

Es ist ein relativ teures Mittel zur Verhinderung des Auftretens von Brüchen bzw. Rissen und wegen der kurzen Abhärtezeit nicht einfach zu verarbeiten. Bei der Herstellung von Doppelbodenplatten müssen daher exakte Mischzeiten eingehalten werden.

Es ist ferner bekannt, Doppelbödenplatten aus einem wannenförmigen Körper mit hoher Festigkeit und hohem Elastizitätsmodul, wie z. B. Stahlblech herzustellen, wobei eine Wannenfüllung aus einem Werkstoff mit geringer Zugfestigkeit und geringem Elastizitätsmodul, wie z. B. Anhydrid verwendet wird (siehe DE-AS 20 04 101, DGM 78 04 148). Bei hohen Punktbelastungen kann zur Zerstörung der Wannenfüllung aufgrund ihrer geringen Zugfestigkeit kommen, während z. B. die Wanne oder jede andere Form der Bewehrung noch Last aufnehmen kann.

Aufgabe der vorliegenden Erfindung ist es, ein Verfahren zur Herstellung von Trägerplatten der eingangs genannten Art anzugeben, daß in wenigen Arbeitsschritten ohne die bisher benötigte Wanne aus Stahlblech durchführbar ist und ohne Härtungsbeschleuniger aus Kalziumaluminatzement, nämlich Ettringit durchführbar ist.

Erfindungsgemäß wird diese Aufgbe durch die in den Patentansprüchen angegebenen Merkmale gelöst. Durch die Auftragung der Mischung auf die Unterseite eines festen Belages kann auf Härtebeschleunigungen wie Ettringit verzichtet werden. Durch die Erhöhung der Biegezugfestigkeit und des Elastizitätsmoduls wird die Kantenfestigkeit der erfindungsgemäßen Trägerplatten so verbessert, daß auch einen zusätzlichen Kantenschutz verzichtet werden kann. In Kombination mit einem geeigneten Oberbelag wird die statische Nutzhöhe und damit auch das Gewicht der erfindungsgemäßen Trägerplatte im Vergleich zu den handelsüblichen Produkten wesentlich verringert.

Die Trägerplatte wird so hergestellt, daß sie ohne Formteile, wie z.B. Rahmen, Wannen o.ä. verlegt werden kann. Dadurch werden mehrere Arbeitsschritte eingespart. Die erfindungsgemäße Trägerplatte kann mit Oberbelägen aus Gummi, Kunststoff, Keramikmaterialien, Metall oder Naturstein versehen werden und entspricht je nach Ausführung den Anforderungen der Feuerwiderstandsklassen 30, F60 oder F90.

Die nachfolgend beschriebene Erfindung befaßt sich mit einer Trägerplatte für Doppelböden, die aus einer aushärtbaren Masse aus Natur-Anhydrid und synthetischem Anhydrid gem. DIN 4308, AB 5 und AB 20 und handelsüblichen Zusatzmitteln, wie Verflüssigern und/oder Kunstharzen besteht. In der Plattenmischung wird Glasfasermaterial vom Typ Fibreglass cem-FIL, geschnittene Glasseide, Produktkennziffer FG.C.AR 60/2, ISO ARC 2083 - 12 mm, und/oder ISO ARC 2083 - 24 mm eingemischt.

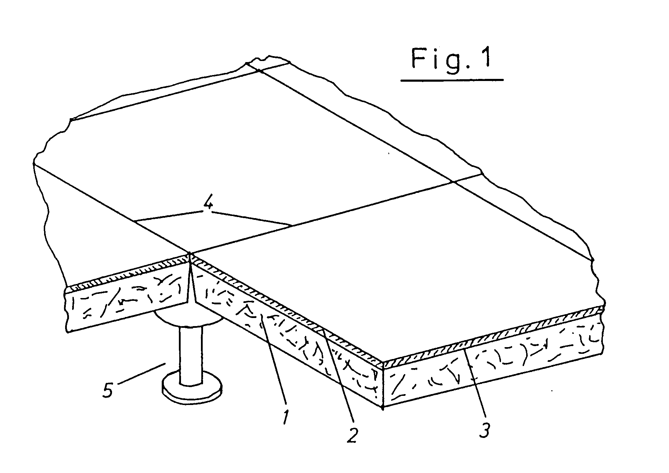

In Fig. 1 ist eine erfindungsgemäße Trägerplatte für einen Doppelboden dargestellt. Die Trägerplatte 1 ist mit einem Oberbelag 2 versehen, wobei zwischen beiden ein schubfester Verbund 3 durch chemische und physikalische Aufrauhung hergestellt wurde. Alternativ kann der Verbund entweder durch chemische oder durch phylikalische Aufrauhung hergestellt werden. Zwischen den einzelnen Trägerplatten sind Fugen 4 erkennbar. Die Doppelbodenplatte 1 wird in bekannter Weise mit einer Stütze 5 getragen.

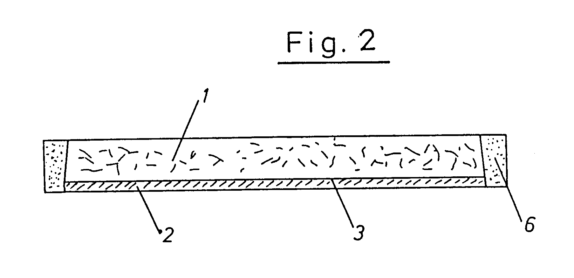

Gemäß Fig. 2 ist der Oberbelag 2 gleichzeitig Formboden für die Trägerplatte 1. Der schubfeste Verbund 3 zwischen Oberbelag und Trägerplatte wird hier mittels eines Klebstoffes 3 hergestellt. Alternativ kann der Verbund auch durch einen anderen Haftvermittler oder durch eine Kombination von Haftvermittler und Kleber hergestellt werden. Die seitliche Begrenzung der Trägerplatte ergibt sich durch einen abnehmbaren Formrahmen 6.

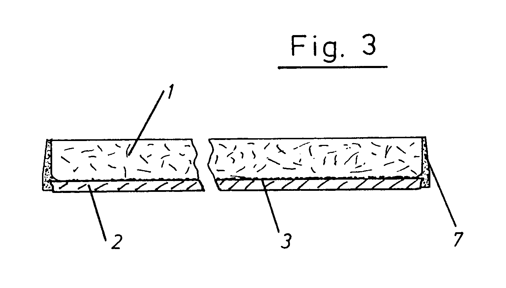

Gemäß Fig. 3 ist der Oberbelag 2 mit einer Kunststoffmasse 7 am Rand zur exakten seitlichen Begrenzung versehen und bildet dadurch gleichzeitig Formboden und bleibenden Formrahmen. Der schubfeste Verbund 3 ist vorzugsweise nur am Formboden in Form eines Klebers aufgebracht, kann aber auch zusätzlich am Kunststoffumleimer aufgebracht sein.

## Patentansprüche

1. Verfahren zur Herstellung einer Trägerplatte (1) für Doppelböden, Decken, Dächer o. dgl. unter Verwendung von natürlichem und/oder synthetischem Anhydrit, Anhydritbindern und/oder weiteren Füllmassen als Ausgangsstoffen, wobei den Ausgangsstoffen Fasermaterial aus Glas und/oder Stahl zugemischt wird, dadurch gekennzeichnet, daß die Mischung auf die Unterseite eines festen Oberbelages (2) aufgetragen wird.

2. Verfahren zur Herstellung einer Trägerplatte nach Anspruch 1, dadurch gekennzeichnet, daß der Oberbelag eine als Gießform ausgebildete Kunststoffmasse zur exakten seitlichen Begrenzung aufweist, in welche die oben beschriebene Füllmasse eingegossen wird.

3. Verfahren nach einem der vorhergehenden Ansprüche, dadurch gekennzeichnet, daß als Oberbelag Gummi, Kunststoff, Keramikmaterial, Teppichboden, Metall und/oder Naturstein verwendet wird.

4. Verfahren nach einem der vorhergehenden Ansprüche, dadurch gekennzeichnet, daß beim Einmischen des Fasermaterials zusätzlich Verflüssiger und/oder Kunstharzkonzentrate zugesetzt werden.

5. Verfahren nach einem der vorhergehenden Ansprüche, dadurch gekennzeichnet, daß als Füllstoffe Gips, Sand und/oder Flugasche zugesetzt werden.

6. Verfahren nach einem der vorhergehenden Ansprüche, dadurch gekennzeichnet, daß der Oberbelag zur Trägerplatte hin vor dem Verbinden mit einem flüssigen Klebstoff versehen wird.

7. Verfahren nach einem der vorhergehenden Ansprüche, dadurch gekennzeichnet, daß der Oberbelag vor der Verbindung mit der Trägerplatte durch chemische und/oder physikalische Behandlung aufgerauht wird.

8. Verfahren nach einem der vorhergehenden Ansprüche, dadurch gekennzeichnet, daß die Ausgangsmassen großflächig auf den Oberbelag vergossen und anschließend in kleine Trägerplatten geschnitten wird.

## Claims

1. A method of producing a bearing slab (1) for false floors, ceilings, roofs or the like, using natural or synthetic anhydrite, anhydrite binders and/or other fillers as starting materials, which are mixed with glass and/or steel fibre material, characterised in that the mixture is applied to the underside of a fixed upper covering (2).

2. A method of producing a bearing slab according to claim 1, characterised in that the upper covering is a plastics material in the form of a casting mould for exactly bounding the sides, the previously-described filler being cast into the mould.

3. A method according to any of the preceding claims, characterised in that the upper covering is of rubber, plastics, ceramics, carpeting, metal and/or stone.

4. A method according to any of the preceding claims, characterised in that liquefiers and/or synthetic resin concentrates are added when mixing the fibre material.

5. A method according to any of the preceding claims, characterised in that the added fillers are gypsum, sand and/or fly ash.

6. A method according to any of the preceding claims, characterised in that the upper covering, before bonding, is provided with a liquid adhesive facing the bearing slab.

7. A method according to any of the preceding claims, characterised in that the upper covering, before bonding to the bearing slab, is roughened by chemical and/or physical treatment.

8. A method according to any of the preceding claims, characterised in that the starting materials are poured over a large area on to the surface covering and subsequently cut into small bearing slabs.

## Revendications

1. Procédé pour la réalisation d'une plaque porteuse (1) pour des doubles planchers, des plafonds, des toits ou semblables en utilisant de l'anhydrite naturelle et/ou synthétique, des liants à base d'anhydrite et/ou d'autres charges comme matières premières, des fibres de verre et/ou d'acier étant mélangées à ces matières premières, caractérisé en ce que le mélange est déposé sur le côté inférieur d'un revêtement supérieur solide (2).

2. Procédé de fabrication d'une plaque porteuse selon la revendication 1, caractérisé en ce que le revêtement supérieur comporte, pour une délimitation latérale exacte, une masse de matière plastique agencée sous forme d'un moule de coulée sur lequel est coulée la masse de remplissage décrite ci-dessus.

3. Procédé selon une des revendications précédentes, caractérisé en ce qu'on utilise comme revêtement supérieur du caoutchouc, une matière plastique, une matière céramique, une moquette, un métal et/ou une pierre naturelle.

4. Procédé selon une des revendications précédentes, caractérisé en ce que, lors de l'incorporation de la matière fibreuse dans le mélange, on ajoute additionnellement des fluidifiants et/ou des concentrats de résine synthétique.

5. Procédé selon une des revendications précédentes, caractérisé en ce que comme matières de remplissage, on ajoute du plâtre, du sable et/ou des cendres volantes.

6. Procédé selon une des revendications précédentes, caractérisé en ce que le revêtement supérieur de la plaque porteuse est pourvu, avant l'assemblage, d'un adhésif fluide.

7. Procédé selon une des revendications précédentes, caractérisé en ce que le revêtement supérieur, avant l'assemblage avec la plaque porteuse, est rendu rugueux par un traitement chimique et/ou physique.

8. Procédé selon une des revendications précédentes, caractérisé en ce que les matières premières sont coulées sur le revêtement supérieur sur une grande surface et sont ensuite découpées sous forme de petites plaques porteuses.
